# EUROPÄISCHE PATENTSCHRIFT

(11) **EP 2 702 269 B1**
(45) Veröffentlichungstag und Bekanntmachung des Hinweises auf die Patenterteilung: **22.07.2015**
(21) Anmeldenummer: 12724865.6
(22) Anmeldetag: 20.04.2012
(51) Int. Cl.: F03D 9/00, F03B 1/00

(54) **VERFAHREN ZUR GEWINNUNG VON WINDENERGIE UND UMWANDLUNG DERSELBEN IN ANDERE ENERGIEFORMEN UND WINDKRAFTANLAGE ZUR DURCHFÜHRUNG DIESES VERFAHRENS**
METHOD FOR HARVESTING WIND ENERGY AND CONVERTING SAME INTO DIFFERENT FORMS OF ENERGY, AND WIND TURBINE FOR CARRYING OUT SAID METHOD
PROCÉDÉ DE PRODUCTION D'ÉNERGIE ÉOLIENNE ET DE CONVERSION DE CETTE DERNIÈRE EN D'AUTRES FORMES D'ÉNERGIE ET ÉOLIENNE PERMETTANT DE METTRE EN OEUVRE LEDIT PROCÉDÉ

(30) Priorität: 27.04.2011 DE 102011018840
(43) Veröffentlichungstag der Anmeldung: 05.03.2014
(73) Patentinhaber: Bychkov GmbH, 10623 Berlin (DE)
(72) Erfinder: BYCHKOV, Yury, Moskau 125466 (RU)
(86) Internationale Anmeldenummer: PCT/DE2012/000411
(87) Internationale Veröffentlichungsnummer: WO 2012/146233

(56) Entgegenhaltungen:
- EP-A2- 0 150 171
- WO-A1-96/07826
- JP-A- 2003 129 942
- US-B1- 6 334 758

## Beschreibung

Die vorliegende Erfindung liegt auf dem Gebiet der Nutzung von Windenergie und dient zur ökologisch sauberen und erneuerbaren Gewinnung von Windenergie und Umwandlung derselben in andere Energieformen, elektrische, mechanische und Wärmeenergie sowie von Kombinationen derselben.

Bei den bekannten Verfahren der Gewinnung und Nutzung von Windenergie besteht die eingesetzte Windkraftanlage in der Regel aus einem Komplex technologischer Ausrüstungen, auf der einen Seite die weithin bekannten und sichtbaren Rotoren, deren aerodynamisch wirksamen Blätter die kinetische Energie des Windes aufnehmen, und auf der anderen Seite zusätzliche Baugruppen oder Aggregate, die die Windenergie in andere Energieformen umwandeln, was eine ganze Reihe von ernsthaften Nachteilen und Beschränkungen in der Anwendung mit sich bringt.

So ergeben sich beispielsweise große Schwierigkeiten im Betrieb der bekannten Windkraftanlagen aus der beträchtlichen Schwankungsbreite der Windgeschwindigkeiten und dem demgegenüber beschränkten dynamischen Umfang, in dem diese genutzt werden können. Die untere Grenze dieses dynamischen Umfangs Vₘᵢₙ bestimmt sich aus dem Moment des Anlaufwiderstands des stehenden Rotors und die obere Grenze Vₘₐₓ liegt bei den Windgeschwindigkeiten, bei denen der Rotor zur Vermeidung von Beschädigungen stillgesetzt werden muß. Innerhalb dieses Bereichs liegt die nominale Windgeschwindigkeit V_{N}, die dem Betreiber die rechnerische Energiemenge liefert.

Wenn man die Jahresmittel-Windgeschwindigkeit V₀ als rechnerische Größe nimmt, können die Windgeschwindigkeiten V_{N}, Vₘᵢₙ und Vₘₐₓ orientierungsweise aus den einfachen Formeln bestimmt werden: V_{N} = K₁•V₀; Vₘᵢₙ = K₂•V₀; Vₘₐₓ = K₃•V₀.

K₁, K₂ und K₃ sind hierbei empirisch zu ermittelnde Korrekturkoeffizienten, die von einer ganzen Reihe von Umständen abhängen wie etwa die topografischen Verhältnisse der Umgebung, die Höhe des Rotors über Grund, die konstruktiven Besonderheiten der Ausrüstung und insbesondere der Arbeitsmaschine und andere Faktoren. Größenordnungsmäßig liegen die Werte der genannten Faktoren in folgenden Bereichen: K₁ = 1,4 ÷ 2,0; K₂ = 0,6 ÷ 0,8; K₃ = 4 ÷ 5. So liegt beispielsweise für eine rechnerische Jahresmittelgeschwindigkeit von V₀ = 5 m/sec die nominale Windgeschwindigkeit V_{N} im Bereich von 6 bis 10 m/sec und die minimale und die maximale Geschwindigkeit liegen bei Vₘᵢₙ = 3 ÷ 4 m/sec und Vₘₐₓ = 20 ÷ 25 m/sec (siehe z. B. "Ressourcen und Effektivität der Nutzung erneuerbarer Energiequellen in Rußland" unter der Redaktion von P. P. Bezrukich, Sankt Petersburg, Verlag Nauka 2002; ISBN 5-02-0249971-8).

Der beschränkte dynamische Umfang der nutzbaren Windgeschwindigkeiten hat einen wesentlichen Einfluß auf die Bedingungen einer zuverlässigen und unterbrechungsfreien Energieversorgung der Verbraucher. So tritt bei schwachen Windgeschwindigkeiten ein Defizit an Energie auf, welches ausgeglichen werden muß durch Energie, die von einer Reserveenergiequelle, beispielsweise einem Dieselaggregat kommt, oder gespeicherte Energie aus verschiedenen Akkumulatoren, die aufgeladen wurden in Perioden hoher Windgeschwindigkeiten, wenn die Generatoren Überschußenergie lieferten.

Vorgeschlagen werden auch Systeme, die verschiedene erneuerbare Energiequellen in Kombination verwenden. So ist aus DE 34 07 881 A1 ein komplexes Energieversorgungssystem bekannt, bei dem neben der Gewinnung elektrischer Energie aus Solarzellen auch die Energie strömender Luft mittels eines Windrades in mechanische und eines von diesem angetriebenen Generators in elektrische Energie umgewandelt wird. Die Luftströmung entsteht durch Zusammenführung von aus der horizontalen in die vertikale Richtung umgelenkten Windströmungen und einer durch Erwärmung in einem Spalt zwischen Gebäudeaußenwand und mit Abstand vor dieser angebrachten Sonnenstrahlungswärme-Absorberplatten aufwärts strömenden Luft.

Auch gemäß DE 27 51 341 A1 sollen alle möglichen natürlichen Energieressourcen kombiniert werden, wobei zur Ausbeutung von Windenergie nur Windturbinen genannt sind.

US 4 079 264 A beschreibt solche Windturbinen, wobei an der engsten Stelle eines winddurchströmten Venturikanals, also an der Stelle höchster Geschwindigkeit und niedrigsten Drucks das Schaufelrad angeordnet ist oder der hier herrschende Unterdruck abgeleitet wird, um an anderer Stelle eine Strömung für ein Schaufelrad zu erzeugen.

Solche kombinierte Energieversorgungssysteme sind von hohem Gewicht und großen Abmessungen, nehmen große Produktionsflächen ein, sind teuer im Bau und im Betrieb und haben einen niedrigen Wirkungsgrad im Bereich von 5 bis 30 % und die Selbstkosten der erzeugten Energie sind hoch.

Schließlich verhindert der begrenzte dynamische Umfang der nutzbaren Windgeschwindigkeiten eine vollständige Nutzung des energetischen Potentials des Windes und wirkt sich negativ aus auf die Größe des Energiewandlungskoeffizienten. So ist es bekannt, daß die existierenden Windkraftwerke nur 20 bis 30 % der Windressourcen nutzen (siehe z. B. A. N. Starkov u. a., Atlas der Winde Rußlands, Mintoenergo Rossii, Moskau 2000; ISBN 5-7542-0067-6).

Somit genügen die bekannten Verfahren der Gewinnung und Umwandlung von Windenergie angesichts der aufgezählten wesentlichen Nachteile nicht den Anforderungen, denen ein zeitgemäßer energetischer Prozeß genügen muß.

Bekannt aus der angewandten Aerohydromechnik ist ein Verfahren zur Gewinnung und Umwandlung der Energie eines Luftstroms, der durch die Ejektorwirkung eines Drückwasserstrahls unter Phasenumwandlung ausgestoßen wird, wobei das Endziel die Bildung eines Zweiphasenmediums aus Wasser und Luft ist. Dieses wird bei bestimmten Mengenverhältnissen der Phasen und der örtlichen Geschwindigkeit in speziell profilierten Kanälen auf Überschallgeschwindigkeit beschleunigt. Diese Bewegung geschieht unter Verdichtungsstößen, die begleitet werden von sprungartiger Erhöhung von Druck und Temperatur des strömenden Mediums, welches danach übergeht in einen Unterschallwasserstrom (siehe z. B. E. J. Sokolov, N. M. Singer "Strahlapparate", 3. Auflage überarbeitet, Moskau, Energoatomizdat, 1989; ISBN 5-283-00079-6). Nachteil dieses Verfahrens ist die niedrige Effektivität der energetischen Umwandlungen, die bedingt ist durch den zusätzlichen Energieaufwand für die Beschleunigung des Luftstroms.

*Die Nutzung einer ähnlichen Technik wird in* EP 0 150 171 A2 *zur Förderung und*/*oder Begasung von Gas-Flüssigkeit-Gemischen sowie Gewinnung technischer Arbeit vorgeschlagen.*

Ausgehend von den vorstehenden Überlegungen wird für die vorliegende Erfindung eine technische Lösung genutzt, bei der atmosphärische Luft durch Ejektorwirkung mittels eines Druckwasserstrahls zu Druckluft verdichtet wird (siehe z.B. B. F. Ljamaev "Wasserstrahlpumpen und -anlagen", Verlag Maschinostroenie, Leningradabteilung, 1988, S. 232 ÷ 237; ISBN 5-217-00278-6).

Aus dieser Quelle ist ein Wasserstrahlkompressor bekannt mit einer Wasserpumpe, einem Hydroströmungsapparat, in dem atmosphärische Luft vom Wasserstrahl nach dem Ejektorprinzip mitgenommen wird, einem Aufnahmetank zur Trennung des Wassers von der verdichteten Luft, Saug- und Druckleitung sowie eine Steuervorrichtung.

*Gemäß* JP 2003 129942 A *dient der von einem ähnlichen Hydroströmungsapparat erzeugte Unterdruck zum Ansaugen von Umgebungsluft, wobei in der Saugleitung mehrere Luftturbinen mit angekoppeltem elektrischen Generator hintereinander angeordnet sind. Auf diese Weise soll ohne Nutzung des natürlichen Windes stabile elektrische Energie gewonnen werden.*

Der hauptsächliche Nachteil des bekannten Verfahrens und der Vorrichtung zur Durchführung desselben ist die Beschränktheit der Anwendung nur unter Bedingungen eines unbewegten Luftmediums und die Unmöglichkeit der Gewinnung und Umwandlung der Energie von Windströmungen als Sonderfall von Luftströmungen mit hohem Koeffizienten der Energieumwandlung und hohem Wirkungsgrad der Vorrichtung.

Aufgabe der Erfindung ist die Erhöhung des Koeffizienten der Energieumwandlung und die Umwandlung der Energie des Windes in einem breiten dynamischen Bereich von anomal schwachen, nahe Null liegenden Windgeschwindigkeiten bis hin zu in der gegebenen Umgebung grenzwertig hohen Geschwindigkeiten, eine zusätzliche Erhöhung des Wirkungsgrades durch Verzicht auf die Anwendung wenig wirksamer Windrotoren, Verringerung des Gewichts und der Abmessungen der Anlagen zur Gewinnung von Windenergie, Verringerung der notwendigen Produktionsfläche, Erhöhung der Zuverlässigkeit des Betriebs und eine unterbrechungsfreie Versorgung der Verbraucher mit verschiedenen Formen von Energie.

Die Lösung der Aufgabe wird durch die Merkmale der Hauptansprüche erfüllt; die Unteransprüche stellen vorteilhafte Weiterbildungen dar.

Die Erfindung wird nachfolgend durch die Beschreibung eines Ausführungsbeispiels der Anlage zur Windenergiegewinnung anhand der beigegebenen Zeichnung weiter erläutert. Diese zeigt ein Schema der Anlage.

Die insgesamt mit 1 bezeichnete Windkraftanlage zur Gewinnung und Umwandlung von Windenergie in andere Energieformen (elektrische, mechanische, Wärme oder Kombinationen hiervon) enthält ein Pumpaggregat 2 aus einer Pumpe 3, vorzugsweise eine Schaufelradpumpe des Zentrifugalgebläsetyps, mit einem Elektroantrieb 4, einen Aufnahmetank 5 aus einem Gehäuse 6, einem Boden 7 und einem Deckel 8, in dem ein unterer Hydraulikraum 9 und ein oberer Pneumatikraum 10 gebildet sind, einen Hydroströmungsapparat 11 mit einer Arbeitskammer 12, einer zentralen, sich verengenden Düse 13, einer Mischkammer 14 und einem Diffusor 15.

Die Anlage hat weiterhin einen Windverstärker 16 aus, in Richtung der Durchströmung hintereinander angeordnet, einem Windfänger 17, einem einen Luftkanal 19 bildenden Gehäuse 18 und einem Austrittsstutzen 20 mit einem Rückschlagventil 21.

Ein hydraulischer Energiewandler 22 enthält eine hydraulische Turbine 23 mit einer Abtriebswelle 24, an die ein elektrischer Generator 25 und/oder eine andere Last 26 anschließbar sind.

Ein pneumatischer Energiewandler 27 enthält eine Luftturbine 28, an deren Abtriebswelle 29 ebenfalls ein elektrischer Generator 30 und/oder eine andere Last 31 anschließbar sind.

Der Austrittsstutzen 20 des Windverstärkers 16 ist im Querschnitt radial oder tangential an den Hydroströmungsapparat 11 angeschlossen. Der Austritt 32 aus der Hydraulikturbine 23 ist über eine kurze Leitung 33 mit einer Steuervorrichtung 34 und einem Rückschlagventil 35 an den Boden 7 des Aufnahmetanks 5 angeschlossen. Der Eintritt 36 in die Luftturbine 28 ist an den Deckel 8 des Aufnahmetanks 5 über eine Luftleitung 39 angeschlossen, in der ein Dreiwegeventil 37 angeordnet ist, welches einen Austritt 38 in die Atmosphäre aufweist.

Die Pumpe 3 ist über eine Saugleitung 40 mit einer Steuervorrichtung 41 und einem Rückschlagventil 42 mit dem Aufnahmetank 5 verbunden und ihre Druckleitung 43 mit einer weiteren Steuervorrichtung 41 ist mit dem Hydroströmungsapparat 11 verbunden.

In der Saugleitung 40 ist ein Boiler 44 vorgesehen, in dem ein Wärmetauscher 45, z. B. ein Rohrschlangenwärmetauscher eingebaut ist, welcher über seinen Vorlauf 47 und seinen Rücklauf 46 durchströmt ist von einem Wärmeträger für eine Warmwasser-Raumheizung. Ein weiterer Wärmetauscher 48 wird über seinen Vorlauf 49 (Kaltwasser) und Rücklauf 50 angeschlossen an ein System der Warmwasserversorgung mit Brauchwasser. Der Austritt aus der Luftturbine 28 ist verbunden mit einem Warmluftverteiler 51 eines Wärmluft-Heizsystems.

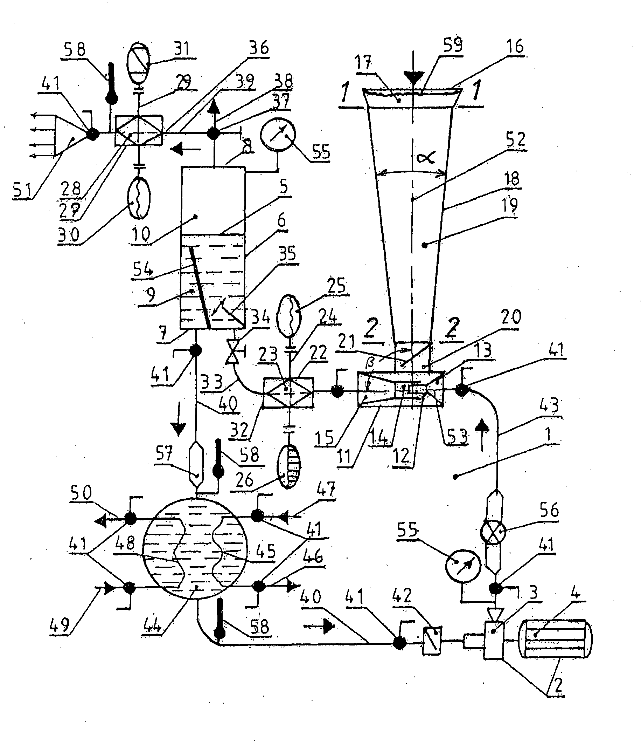

Die Windverstärker 16 sind installiert in einer Anzahl von n ≥ 1, wobei die geraden oder gekrümmten Achsen 52 bezüglich der Längsachse des Hydroströmungsapparats 11 unter einem Winkel β angeordnet ist, der der Bedingung genügt 180° ≥ β ≥ 0° unter Berücksichtigung der Windrichtung. In der Zeichnung ist eine Variante der Windkraftanlage mit einem Windverstärker (n = 1) gezeigt, bei dem die Achse 52 des Windverstärkers 16 unter einem rechten Winkel **(β = 90°)** zur Achse 53 des Hydroströmungsapparats 11 verläuft.

Der Strömungskanal jedes Windverstärkers verläuft in Richtung der Durchströmung sind konfusorartig verengend und zwar unter folgenden geometrischen Bedingungen: F₁ = (10 ÷100) F₂ und 24° ≥ α ≥ 8°, wobei F₁ die lichte Querschnittsfläche in Höhe des Eintrittsquerschnitts 1 - 1, F₂ die Querschnittsfläche am Austrittsquerschnitt 2 - 2 und α der Konfusorwinkel des Windkanals 19 ist.

Die Querschnittsform des Kanals kann eine beliebige geeignete, vorzugsweise eine runde sein. Das Material des Gehäuses 18 besteht aus einem wasser- und luftundurchlässigen Material.

In den unteren Hydraulikraum 9 des Aufnahmetanks 5 ist eine Trennwand 54 schräg eingebaut, die die Bildung einer maximalen Oberfläche der Trennung der Luft aus dem Wasser begünstigt.

Zur Steuerung der Durchsätze und der Drücke sind als Steuervorrichtungen 34 und 41 geeignete Armaturen und zur Verhinderung von Rückströmungen sind Rückschlagventile 35 und 42 vorgesehen. Zur Messung, Überwachung und Verfolgung der Betriebsparameter sind als Meßgeräte Manometer 55, Durchflußmesser 56, Wärmezähler 57 und Thermometer 58 nach den anerkannten Regeln der Montage und der Anwendung solcher Geräte vorgesehen.

Am Eintritt in den Windfänger 17 ist zur Verhinderung des Eindringens von Schmutz und Fremdobjekten ein Netz 59 angeordnet.

Das Verfahren zur Gewinnung und Umwandlung von Windenergie in andere Energieformen (elektrische, mechanische und Wämeenergie sowie Kombinationen derselben) verläuft in der Weise, dass die eingefangene Windströmung im Windverstärker 16 zwangsweise beschleunigt wird und dieser beschleunigte Luftstrom in der Mischkammer 14 des Hydroströmungsapparats 11 mit dem von der Pumpe 3 geförderten, gleichfalls beschleunigten Druckwasserstrom gemischt wird, wodurch der Prozess der Bildung eines Überschall-Wasserluftstroms intensiviert wird, dessen Bewegung von Verdichtungsstößen begleitet wird, die mit sprungartigen Erhöhungen von Druck und Temperatur einhergehen. Hinter dem Diffusor 15 wird am Austritt des Hydroströmungsapparats 11 ein Unterschall-Zweiphasen-Druckstrom Luft-Wasser mit überschüssiger Druck- und Wärmeenergie erhalten.

Ein großer Teil der überschüssigen hydraulischen Energie des Wasser-Luft-Druckstroms wird in dem hydraulischen Energiewandler 22 in elektrische Energie umgesetzt, indem an dessen hydraulische Turbine 23 ein Elektrogenerator 25 angeschlossen wird, oder in eine andere Energieform, indem an die Abtriebswelle 24 eine andere Arbeitsmaschine 26 angeschlossen wird.

Nach der Entnahme und Wandlung hydraulischer Energie im Wandler 22 werden die Phasen des noch energietragende Wasser-Luft-Druckstroms im Aufnahmetank 5 getrennt, wobei sich die Druckluft im oberen Luftraum 10 ansammelt und das Wasser im unteren Hydraulikraum 9 verbleibt.

Die in der Druckluft verbliebene Energie wird genutzt im pneumatischen Energiewandler 27, an dessen Luftturbine 28 über eine Ausgangswelle 29 ein elektrischer Generator 30 und/oder eine andere Last 31 angeschlossen wird.

Nach dem Austritt aus der pneumatischen Turbine 28 gelangt die heiße Druckluft als Wärmeträger für eine Warmluft-Raumheizung in einen Warmluftverteiler 51. Das heiße Wasser durchströmt auf seinem Weg durch die Saugleitung 40 zurück zur Pumpe 3 den Boiler 44 als Wärmequelle für den im Boiler befindlichen Wärmetauscher 45, durch den über dessen Vorlauf 47 und Rücklauf 46 das Wasser einer Warmwasser-Raumheizung zirkuliert, und/oder einen weiteren Wärmetauscher 48 für eine Warmwasserversorgung, dessen Vorlauf 49 der Kaltwassereintritt aus der öffentlichen Wasserversorgung ist und dessen Rücklauf 50 warmes Brauchwasser bereithält.

Die Beschleunigung des Luftstroms geschieht in einem dynamischen Bereich, der bis zu 1:100 betragen kann, wobei dieser Bereich das Verhältnis beschreibt zwischen der minimalen und der maximalen nutzbaren Windgeschwindigkeit am Eintritt in den Windverstärker in Höhe von dessen Querschnitt 1 - 1.

Der Druckwasserstrom für den Hydroströmungsapparat 11 wird vom Pumpaggregat 2 erzeugt, dem in der Anlaufphase der Anlage elektrische Energie von einer Reserve- oder einer unabhängigen Energiequelle zugeführt wird. Im Arbeitsbetrieb wird ein Teil der in der Anlage erzeugten elektrischen Energie verwendet. Im Pumpenantrieb ist eine Regelvorrichtung zur Anpassung der Drehzahl an die wechselnden Windbedingungen vorgesehen; zur Aufrechterhaltung optimaler Betriebsbedingungen ist die Drehzahl bei nachlassendem Wind zu reduzieren und zu erhöhen bei auffrischendem Wind.

Der Betrieb der beschriebenen Anlage verläuft wie folgt:

Beim Einschalten des Pumpaggregats 2 strömt Wasser durch die Druckleitung 43 in die zentrale, sich verengende Düse 13 des Hydroströmungsapparats 11. Am Austritt aus der Düse 13 ist die Geschwindigkeit gestiegen und der Druck gefallen. Dadurch entsteht in der Arbeitskammer 12 ein Unterdruck, in welche gleichzeitig mit dem Wasserstrom der zwangsweise beschleunigte Luftstrom aus dem Wind gelangt. Dieser kommt über den Windfänger 17 des Windverstärkers 16 in das Gehäuse 18 mit dem sich konfusorartig verengenden Kanal 19, dessen Querschnittsfläche F₁ am Eintritt größer ist als die am Austritt F₂.

Wegen dieser konstruktiven Gestaltung des Konfusorkanals 19 herrschen in diesem folgende aerodynamische Bedingungen: P₁ > P₂; V₁ < V₂; ρ₂V₂²/2 > ρ₁V₁²/2 wo P den Druck, V die Geschwindigkeit, ρV²/2 die kinetische Energie und hierin ρ die Dichte des Mediums bedeutet. Die Indizes 1 und 2 bezeichnen den jeweils betrachteten Ort: 1 steht für den Eintrittsquerschnitt 1 - 1 und 2 für den Austrittsquerschnitt 2 - 2.

Auf diese Weise ergeben sich in Übereinstimmung mit den vorstehenden aerodynamischen Bedingungen in der Arbeitskammer 12 optimale Bedingungen für die Ejektormitnahme des beschleunigten Luftstroms durch den gleichfalls beschleunigten Wasserstrahl. Weiterhin kommt es in der Mischkammer 14 zu einer intensiven Mischung des Wassers mit der Luft. Erhalten wird eine Wasser-Luft-Mischung, in der die Schallgeschwindigkeit um vieles niedriger liegt als die Schällgeschwindigkeit in einem einphasigen Wasserstrom. Als Folge hiervon verläuft am Eintritt in den Diffusor 15 die Bewegung des auf Überschall beschleunigten Wasser-Luft-Gemischs unter Begleitung von Verdichtungsstößen, die gleichzeitig Druck- und Temperatursprünge darstellen.

Nach Maßgabe des Fortschritts der Bewegung im sich vom Eintritt zum Austritt erweiternden Diffusor 15 fällt die Geschwindigkeit auf Werte unterhalb der eigenen Schallgeschwindigkeit und am Austritt wird ein Unterschall-Druckstrom des Wasser-Luft-Gemischs erhalten, der über überschüssige hydraulische Energie verfügt, die sich aus der Summe von potentieller und kinetischer. Energie ergibt, sowie über überschüssige Wärmeenergie, die in Abhängigkeit vom Druck zu Temperaturen des Wasser-Luft-Druckstroms von 80 ÷ 120° C führt bei einem Tempo der Erhitzung von 0,5 ÷ in der Minute.

Aus dem Hydroströmungsapparat 11 gelangt der Wasser-Luft-Druckstrom als Energieträger in den hydraulischen Energiewandler 22, dessen Turbine 23 über ihre Abtriebswelle 24 einen elektrischen Generator 25 zur Erzeugung elektrischer Energie und/oder eine andere Arbeitsmaschine 26, die durch Zufuhr mechanischer Energie betrieben wird. In diesem Stadium wird ein großer Teil der hydraulischen Energie des Unterschall-Druckstroms Wasser-Luft verbraucht.

Nach dem hydraulischen Energiewandler 22 gelangt der Unterschall-Druckstrom Wasser-Luft, der noch über beträchtliche verbleibende hydraulische und Wärmeenergie verfügt, über die kurze Rohrleitung 33 in den Aufnahmetank 5. In diesem trennt sich die Druckluft vom Wasser und sammelt sich im oberen pneumatischen Raum 10, während das Wasser im unteren hydraulischen Raum 9 verbleibt. Nach Maßgabe ihrer Ansammlung und des Erreichens des rechnerischen Drucks strömt die Luft durch das Dreiwegeventil 37 und die Luftleitung 39 in den pneumatischen Energiewandler 27, dessen Luftturbine 28 über seine Abtriebswelle 29 einen elektrischen Generator 30 und/oder eine andere Arbeitsmaschine 31 zur zusätzlichen Erzeugung von elektrischer oder anderer Energie antreibt.

Im Aufnahmetank 5 verteilt sich die Wärmeenergie des vom hydraulischen Energiewandler kommenden Stroms in die im Wasser des unteren Hydraulikraums 9 enthaltene Wärmeenergie und in die in der Druckluft im oberen pneumatischen Raum 10 enthaltene Wärmeenergie, wobei die Temperaturen beider Medien ungefähr gleich sind.

In der dargestellten Ausbildung durchströmt das heiße Wasser als Wärmeträger den in die Saugleitung 40 eingebauten Boiler 44, in dem ein Wärmetauscher 45 über seinen Vorlauf 47 und Rücklauf 46 zirkulierendes Wasser erwärmt, das zur Raumheizung dient. Zusätzlich oder alternativ enthält der Boiler einen weiteren Wärmetauscher 48 zur Erwärmung von Brauchwasser, das als Kaltwasser am Vorlauf 49 ankommt und am Rücklauf 50 als Warmwasser den Verbrauchern zur Verfügung steht.

Die Wärmeenergie der heißen Druckluft dient vorzugsweise einer Warmluft-Raumheizung als Wärmeträger, wozu es in einen Warmluftverteiler 51 gelangt und hier auf einzelne Räume bzw. Verbraucher verteilt wird. Es ist offensichtlich, daß die Menge der hier zur Verfügung stehenden Luft der Menge entspricht, die vom Windfänger 17 des Windverstärkers 16 eingefangen wurde. Bei Bedarf kann jedoch ein überschüssiger Druck der Druckluft über das Dreiwegeventil 37 abgebaut werden, indem dieses die Luft über die Ausblaseleitung 38 in die Atmosphäre entweichen läßt.

Die vorgeschlagene Erfindung erlaubt mit ihren grundlegenden und zusätzlichen Merkmalen eine komplexe Nutzung der Windenergie bei hohem Koeffizienten der Energiewandlung in breitem Bereich von anomal niedrigen Windgeschwindigkeiten von 0,5 m/sec bis hin zu grenzwertig hohen Windgeschwindigkeiten von 50 m/sec, die mit den üblichen heutigen Windkraftanlagen nicht mehr genutzt werden könnten.

Der Verzicht auf die üblichen Rotoren erbringt mit dem vorgeschlagenen Verfahren eine schroffe Erhöhung des Wirkungsgrades der Windkraftanlage bei gleichzeitiger Verringerung von Gewicht und Abmessungen sowie von benötigter Produktionsfläche.

Außerdem befinden sich die Eingangsparameter des Pumpaggregats mit regelbarem Elektroantrieb immer im optimalen Sparbetrieb unabhängig von den Schwankungen der Windgeschwindigkeiten, weil durch die Verdichtungsstöße keine Rückwärtsänderungen der aerodynamischen und der Temperatur-Austrittsparameter des Energieträgers stattfinden.

Von besonderer Wichtigkeit ist noch, daß die im vorgeschlagenen Verfahren ablaufenden energetischen Prozesse der Gewinnung und Umwandlung der Windenergie leicht in verschiedenen Größenordnungen realisiert werden können, sodass ein Spektrum von Klassen von Windenergieanlagen mit hohen technisch-wirtschaftlichen Kennwerten angeboten werden können, sowohl im Kilowatt- als auch im Megawattbereich.

Die gewerbliche Anwendbarkeit ist in breitem Umfang gegeben: in verschiedenen Energieversorgungssystemen verschiedener Zweckbestimmung, in der Wärme- und Warmwasserversorgung von Wohngebieten und Industrieansiedlungen, ebenso auch in kleinen Windkraftanlagen wie etwa in stationären Einzelanlagen für einzelne Haushalte oder auch transportable Anlagen für die Energie und Wärmeerzeugung.

## Patentansprüche

1. Verfahren zur Gewinnung von Windenergie und Umwandlung derselben in andere Energieformen, *und zwar* elektrische, mechanische, Wärme oder deren verschiedene Kombinationen, bei dem man einen aus dem Wind mit einem Windverstärker (16) eingefangenen Luftstrom in einem Hydroströmungsapparat (11) mit einer Arbeitskammer (12), einer zentralen, sich verengenden Düse (13) einer Mischkammer (14) und einem Diffusor (15) mit einem Druckwasserstrom unter Phasenumwandlung in ein Wasser-LuftGemisch zu einem Überschall-Wasser-Luftstrom mit Verdichtungsstößen mischt, die mit sprungartigen Erhöhungen des Drucks und der Temperatur einhergehen,
wobei der Windverstärker in Richtung seiner Durchströmung aufeinanderfolgend angeordnet aufweist einen Windfänger (17), ein Gehäuse (18), das einen sich konfusorartig verengenden Windkanal (19) bildet, und einen Austrittsstutzen (20) mit einem Rückschlagventil (21), welcher, im Querschnitt gesehen, radial oder tangential an den Hydroströmungsapparat (11) angeschlossen ist,
und mit nachfolgendem Übergang des Überschall-Wasser-Luftstroms in eine Unterschall-Wasser-Luft-Druckströmung als Energieträger,
wobei man den *eingefangenen Luftstrom in* dem *sich konfusorartig verengenden Windkanal* beschleunigt und mit dem *von einem Pumpaggregat erzeugten und* gleichfalls beschleunigten Druckwasserstrom mischt und dadurch die Bildung des Überschall-Wasser-Luftstroms intensiviert, der danach in einen Unterschall-Wasser-Luft-Druckstrom als Energieträger überführt wird,
man diesen zu weiteren energetischen Umwandlungen leitet, bei denen ein großer Teil seiner hydraulischen Überschußenergie in elektrische und/oder mechanische Energie gewandelt wird,
wonach dieser Unterschall-Wasser-Luft-Druckstrom als Energieträger mit verbleibender hydraulischer und Wärmeenergie einer Trennung unterworfen wird, bei der die Druckluft vom Wasser abgetrennt wird und deren verbleibende pneumatische Energie zusätzlich in elektrische und/oder mechanische Energie gewandelt wird,
und man die verbliebene Wärmeenergie des Wassers und der Luft zur Aufheizung von Brauchwasser oder Warmwasserbereitung und/oder Warmluftheizung verwendet.

2. Verfahren zur Gewinnung und Umwandlung von Windenergie nach Anspruch 1, **dadurch gekennzeichnet, daß** *das den Druckwasserstrom erzeugende Pumpaggregat* in der Anlaufphase von einem elektrischen Energiespeicher oder einer unabhängigen Elektroenergiequelle oder vom Netz gespeist wird und im normalen Arbeitsbetrieb durch einen Teil der im Verfahren erarbeiteten Elektroenergie gespeist wird, wobei eine Regelvorrichtung zur optimalen Anpassung des Betriebszustandes des Pumpaggregats an die schwankenden Windverhältnisse vorgesehen ist, die die Drehzahl des Pumpenantriebs bei nachlassender Windgeschwindigkeit verringert und bei auffrischenden Winden erhöht.

3. Windkraftanlage zur Durchführung des Verfahrens nach Anspruch 1 oder 2, wobei zur den hydraulischen Energieträger im Kreislauf führenden Anlage (1) gehört: ein Pumpaggregat (2) aus einer Pumpe (3) vorzugsweise des Radialverdichtertyps mit einem Elektroantrieb (4); ein Aufnahmetank (5) aus einem Gehäuse (6) mit Boden (7) und Deckel (8), in dem ein unterer hydraulischer (9) und ein oberer pneumatischer (10) Raum gebildet ist;
ein Hydroströmungsapparat (11) mit einer Arbeitskammer (12), einer zentralen, sich verengenden Düse (13), einer Mischkammer (14) und einem Diffusor (15),
wobei die Pumpe (3) verbunden ist mit dem Aufnahmetank (5) über ihre Saugleitung (40), die eine Steuervorrichtung (41) und ein Rückschlagventil (42) aufweist, sowie mit dem Hydroströmungsapparat (11) über ihre Druckleitung (43), die eine Steuervorrichtung (41) aufweist,
und mit einem Windverstärker (16) aus, in Richtung der Durchströmung aufeinanderfolgend angeordnet, einem Windfänger (17), einem Gehäuse (18), das einen sich konfusorartig verengenden Windkanal (19) bildet, und einem Austrittsstutzen (20) mit einem Rückschlagventil (21), welcher, im Querschnitt gesehen, radial oder tangential an den Hydroströmungsapparat (11) angeschlossen ist,
- einem hydraulischen Energiewandler (22) mit einer hydraulischen Turbine (23), deren Abtriebswelle (24) verbindbar ist mit einem elektrischen Generator (25) und/oder einer anderen mechanischen Last (26),
- einem pneumatischen Energiewandler (27) mit einer pneumatischen Turbine (28), deren Abtriebswelle (29) ihrerseits anschließbar ist an einen elektrischen Generator (30) und/oder eine mechanische Last (31), wobei der Luftaustritt aus der pneumatischen Turbine (28) verbunden ist mit einer Verteilvorrichtung (51) eines Warmluftheizsystems,
wobei der Austritt aus der hydraulischen Turbine (23) über eine kurze Rohrleitung (33) mit einer Steuervorrichtung (34) und einem Rückschlagventil (35) verbunden ist mit dem Boden (7) des Aufnahmetanks (5) und
der Eintritt (36) in die pneumatische Turbine (28) über eine Luftleitung (39) mit einem Dreiwegeventil (37) mit einem Austritt (38) in die Atmosphäre verbunden ist mit dem Deckel (8) des Aufnahmetanks (5),
und einem Boiler (44) in der Saugleitung (40) der Pumpe (3), welcher einen Wärmetauscher (45) mit Vorlaufanschluß(47) und Rücklaufanschluß (46) eines Warmwasserheizsystems und/oder einen Wärmetauscher (48) mit Vorlaufanschluß (49) und Rücklaufanschluß (50) eines Warmwasserversorgungssystems.

4. Windkraftanlage nach Anspruch 3, **gekennzeichnet durch** Windverstärker (16) in einer Anzahl von n ≥ 1, wobei ihre gestreckten oder gekrümmten Achsen (52) bezüglich der Längsachse (53) des Hydroströmungsapparats (11) in den Wind angeordnet sind unter einem Winkel β, der der Bedingung genügt 180° ≥ β ≥ 0°.

5. Windkraftanlage nach Anspruch 3 oder 4, **dadurch gekennzeichnet, daß** der Konfusor-Windkanal (19) jedes Windverstärkers (16) den folgenden geometrischen Bedingungen genügt: F₁/F₂ = (10 - 100); 24° ≥ α ≥ 8°, wobei F₁ und F₂ die Flächen des Eintrittsquerschnitts 1-1 bzw. des Austrittsquerschnitts 2-2 und α der Konfusorwinkel des Windkanals (19) sind.

6. Windkraftanlage nach einem der Ansprüche 3 bis 5, **dadurch gekennzeichnet, daß** der Windkanal (19) vorzugsweise einen runden Querschnitt aufweist.

7. Windkraftanlage nach einem der Ansprüche 3 bis 6, **dadurch gekennzeichnet, daß** das Gehäuse (18) des Windverstärkers (16) aus einem wasser- und luftundurchlässigen Material besteht.

8. Windkraftanlage nach einem der Ansprüche 3 bis 7, **gekennzeichnet durch** eine im Aufnahmetank (5) angeordnete geneigte Trennwand (54) zur Erhöhung der maximalen Fläche der Trennung der Medien Wasser - Druckluft.

9. Windkraftanlage nach einem der Ansprüche 3 bis 8, **gekennzeichnet durch** ein am Eintritt des Windfängers (17) angeordnetes Netz (59) zur Verhinderung des Einfallens von Fremdgegenständen.

## Claims

1. Method for harvesting wind-energy and converting the same into other forms of energy, namely electrical, mechanical, thermal or different combinations thereof, in which an air flow captured from the wind with a wind booster (16) is, in a hydroflow device (11) with a working chamber (12), a central converging nozzle (13), a mixing chamber (14), and a diffuser (15), mixed with a pressurized water flow with phase conversion in a water-airmixture into a supersonic water-air-flow with compression shocks accompanied by sudden increases of pressure and temperature,
in which the wind booster comprises consecutively in the direction of the flow a wind catcher (17), a housing (18) forming a confuserlike converging wind channel (19), and an outlet neck (20) with a check valve (21) attached, as seen in the transverse section, radially or tangentially to the hydroflow device (11), and with subsequent transition of the supersonic water-air-flow into a pressurized subsonic water-air-flow as energy carrier,
and in which the captured air flow is accelerated in the confuserlike converging wind channel and mixed with the pressurized water flow produced by a pump installation and also accelerated thereby intensifying the obtention of the supersonic water-air-flow which thereafter is converted into the subsonic pressurized water-air-flow as energy carrier,
which is subjected to further energy transformations in which a large part of its hydraulic excess energy is converted into electrical and/or mechanical energy,
whereupon this pressurized subsonic water-air-flow is, as energy carrier with residual hydraulic and thermal energy, subjected to a separation in which the pressurized air is separated from the water and its remaining pneumatic energy is transformed additionally into electrical and/or mechanical energy and the remaining thermal energy of the water and the air is used for the provision of hot water or heating with water and/or air.

2. Method of harvesting and converting of wind energy according to claim 1, **characterized in that** the pump installation providing the pressurized water flow is, in the start-up phase, energized from an electrical accumulator or an independent source of electrical energy or the electrical grid, and, in the normal operation phase, by a part of the electrical energy produced by the method, and **in that** a control unit is provided for the optimal adjustment of the operational state of the pump installation to the varying wind conditions, reducing the rotation speed of the pump with decreasing wind speeds and increasing the same with freshening wind.

3. Wind power installation for carrying out the method according to claims 1 or 2 in which the installation (1) circulating the hydraulic energy carrier comprises:
the pump installation (2) consisting of a pump (3) preferably of the radial type with an electric drive (4),
a reservoir (5) with a body (6), a bottom (7) and a lid (8) in which a lower hydraulic (9) and an upper pneumatic (10) compartment is formed,
the hydroflow device (11) with the working chamber (12), the central converging nozzle (13), the mixing chamber (14), and the diffuser (15),
wherein the pump (3) is connected with the reservoir (5) by the suction line (40) containing a control device (41) and a check valve (42) and with the hydroflow device (11) by the pressure line (43) containing a control device (41),
and in which the wind booster (16) comprises consecutively in the direction of the flow the wind catcher (17), the housing (18) forming the confuserlike converging wind channel (19), and the outlet neck (20) with the check valve (21) attached, as seen in the transverse section, radially or tangentially to the hydroflow device (11),
- and with a hydraulic energy converter (22) with a hydraulic turbine (23), the output shaft (24) of which is coupleable with an electrical generator (25) or some other mechanical load (26),
- and with a pneumatic energy converter (27) with a pneumatic turbine (28), the output shaft (29) of which is also coupleable with an electrical generator (30) and/or some other mechanical load (31), wherin the air exhaust of the pneumatic turbine (28) is connected to the distribution device (51) of a warm air heating system,
and wherein the outlet of the hydraulic turbine (23) is connected to the bottom (7) of the reservoir (5) with a short tubing (33) with a control device (34) and a check valve (35)
and the inlet (36) into the pneumatic turbine is connected to the lid (8) of the reservoir (5) by means of an air duct (39) comprising a three-way valve (37) having an exhaust (38) into the atmosphere,
and with a boiler (44) in the suction line (40) of the pump (3) having a heat exchanger (45) with an outgoing connection (47) and a return connection (46) of a system for warm-water heating and/or a heat exchanger (48) with an outgoing connection (49) and a return connection (50) of a system for providing warm water.

4. Wind power installation according to claim 3, **characterized by** wind boosters (16) in the number of n ≥ 1 with their straight or curved axes (52) are turned into the wind under an angle β meeting the condition 180° ≥ β ≥ 0°

5. Wind power installation according to claim 3 or 4, **characterized in that** the converging wind channel (19) of each wind booster (16) meets the following geometrical condition: F₁/F₂ = (10 - 100); 24° ≥ α ≥ 8° with F₁ and F₂ being the cross-sectional areas of the intake 1-1 and the outlet 2-2 respectively and α being the angle of convergence of the wind channel (19).

6. Wind power installation according to one of the claims 3 to 5, characterized that the wind channel (19) preferably is of a round cross section.

7. Wind power installation according to one of the claims 3 to 6, **characterized in that** the housing (18) of the wind booster (16) is of water- and airtight material.

8. Wind power installation according to one of the claims 3 to 7, **characterized by** an inclined partition wall (54) in the reservoir (5) for increasing the maximum separation area of the media water - pressurized air.

9. Wind power installation according to one of the claims 3 to 8, **characterized by** a net (59) at the entrance of the wind catcher (17) for preventing the entry of foreign objects.

## Revendications

1. Procédé pour l'obtention d'énergie éolienne et la conversion de cette même en d'autres formes d'énergies, à savoir de l'énergie électrique, mécanique, de la chaleur ou différentes combinaisons de celles-ci, dans lequel on mélange un courant d'air attrapé avec un dispositif de renforcement de vent (16) à partir du vent, dans un appareil d'écoulement hydraulique (11) avec une chambre de travail (12), une buse (13) centrale se rétrécissant d'une chambre de mélange (14) et un diffuseur (15), avec un courant d'eau sous pression, par conversion de phase, en un mélange d'air et d'eau pour donner un courant d'air et d'eau supersonique avec des chocs de compression, lesquels accompagnent des augmentations brusques de la pression et de la température,
le dispositif de renforcement de vent présentant, en direction de son passage de flux, en disposition successive, un capteur de vent (17), un boîtier (18) formant une soufflerie (19) se rétrécissant à la manière d'un confuseur, et une tubulure de sortie (20) avec un clapet anti-retour (21), laquelle, lorsque vue en coupe transversale, est raccordée radialement ou tangentiellement à l'appareil d'écoulement hydraulique (11),
et avec la transition qui s'en suit du courant d'air et d'eau supersonique en un écoulement sous pression d'air et d'eau subsonique en tant que ressource énergétique,
dans lequel on accélère le courant d'air attrapé dans le canal d'air se rétrécissant à la manière d'un confuseur, et le mélange avec le courant d'eau sous pression produit par une unité de pompage et également accéléré, en intensifiant de la sorte la formation du courant d'air et d'eau supersonique que l'on transforme ensuite en un courant sous pression d'air et d'eau subsonique en guise de ressource énergétique,
celui-ci étant conduit pour d'autres conversions énergétiques lors desquelles une grande partie de son énergie hydraulique excédentaire est transformée en énergie électrique et/ou mécanique,
après quoi ce courant sous pression d'eau et d'air subsonique en tant que ressource énergétique avec de l'énergie hydraulique et thermique résiduelle est soumis à une séparation au cours de laquelle l'air comprimé est séparé de l'eau et l'énergie pneumatique résiduelle de celui-ci étant additionnellement transformée en énergie électrique et/ou mécanique,
et l'énergie thermique résiduelle de l'eau et de l'air étant utilisée pour échauffer de l'eau industrielle ou pour la production d'eau chaude et/ou le chauffage à air chaud.

2. Procédé pour obtenir et convertir de l'énergie éolienne selon la revendication 1, **caractérisé en ce que** l'unité de pompage produisant le courant d'eau sous pression est alimentée, lors de la phase de démarrage, par un accumulateur d'énergie électrique ou une source d'énergie électrique indépendante ou par le réseau, et est alimentée, lors du mode de fonctionnement normal, par une partie de l'énergie électrique obtenue lors du procédé,
dans lequel un dispositif de réglage est prévu pour l'adaptation optimale de l'état de fonctionnement de l'unité de pompage aux conditions variables du vent, lequel réduit le nombre de tours de l'entraînement de pompe en cas de diminution de la vitesse du vent et l'augmente en cas de vents se renforçant.

3. Centrale éolienne pour la mise en oeuvre du procédé selon la revendication 1 ou 2, dans laquelle, font partie de la centrale (1) maintenant en circulation la ressource énergétique hydraulique :
une unité de pompage (2) à base d'une pompe (3), de préférence de type compresseur radial, avec un entraînement électrique (4) ;
un réservoir de récupération (5) à base d'un boîtier (6) avec un fond (7) et un couvercle (8), dans lequel sont formés un espace hydraulique inférieur (9) et un espace pneumatique supérieur (10) ;
un appareil d'écoulement hydraulique (11) avec une chambre de travail (12), une buse (13) centrale se rétrécissant, une chambre de mélange (14) et un diffuseur (15),
dans laquelle la pompe (3) est reliée au réservoir de récupération (5) via sa conduite d'aspiration (40) qui présente un dispositif de commande (41) et un clapet anti-retour (42), ainsi qu'à l'appareil d'écoulement hydraulique (11) via sa conduite de refoulement (43) qui présente un dispositif de commande (41), et à un dispositif de renforcement de vent (16) se composant, de manière disposée successivement en direction du passage de flux, d'un capteur de vent (17), d'un boîtier (18) qui forme une soufflerie (19) se rétrécissant à la manière d'un confuseur, et d'une tubulure de sortie (20) avec un clapet anti-retour (21), laquelle, lorsque vue en coupe transversale, est raccordée radialement ou tangentiellement à l'appareil d'écoulement hydraulique (11),
- un convertisseur d'énergie hydraulique (22) avec une turbine hydraulique (23) dont l'arbre de sortie (24) peut être relié à un générateur électrique (25) et/ou une autre charge mécanique (26),
- un convertisseur d'énergie pneumatique (27) avec une turbine pneumatique (28) dont l'arbre de sortie (29) peut quant à lui être raccordé à un générateur électrique (30) et/ou une charge mécanique (31), la sortie d'air de la turbine pneumatique (28) étant reliée à un dispositif de répartition (51) d'un système de chauffage à air chaud,
dans laquelle la sortie de la turbine hydraulique (23) est reliée, via une conduite (33) courte avec un dispositif de commande (34) et un clapet anti-retour (35), au fond (7) du réservoir de récupération (5), et l'entrée (36) dans la turbine pneumatique (28) étant reliée, via une canalisation d'air (39) avec une vanne à trois voies (37) avec une sortie (38) dans l'atmosphère, au couvercle (8) du réservoir de récupération (5),
et un chauffe-eau(44) dans la conduite d'aspiration (40) de la pompe (3), lequel présente un échangeur de chaleur (45) avec un raccord aller (47) et un raccord de retour (46) d'un système de chauffage à eau chaude et/ou un échangeur de chaleur (48) avec un raccord aller (49) et un raccord de retour (50) d'un système d'alimentation en eau chaude.

4. Centrale éolienne selon la revendication 3, **caractérisée par** des dispositifs de renforcement de vent (16) d'une quantité n ≥ 1, dans laquelle leurs axes (52) étirés ou courbés sont disposés dans le vent, compte tenu de l'axe longitudinal (53) de l'appareil d'écoulement hydraulique (11), selon un angle β satisfaisant à la condition : 180° ≥ β ≥ 0°.

5. Centrale éolienne selon la revendication 3 ou 4, **caractérisée en ce que** la soufflerie-confuseur (19) de chaque dispositif de renforcement de vent (16) satisfait aux conditions géométriques suivantes : F₁/F₂ = (10 - 100) ; 24° ≥ α ≥ 8°, où F₁ et F₂ sont les surfaces de la section transversale d'entrée 1-1 ou de la section transversale de sortie 2-2, et α l'angle de confuseur de la soufflerie (19).

6. Centrale éolienne selon l'une des revendications 3 à 5, **caractérisée en ce que** la soufflerie (19) présente de préférence une section transversale ronde.

7. Centrale éolienne selon l'une des revendications 3 à 6, **caractérisée en ce que** le boîtier (18) du dispositif de renforcement de vent (16) se compose d'un matériau imperméable à l'eau et à l'air.

8. Centrale éolienne selon l'une des revendications 3 à 7, **caractérisée par** une cloison (54) inclinée disposée dans le réservoir de récupération (5) pour augmenter la surface maximale de la séparation des milieux eau - air comprimé.

9. Centrale éolienne selon l'une des revendications 3 à 8, **caractérisée par** un filet (59) disposé à l'entrée du capteur de vent (17) pour empêcher que des objets étrangers ne tombent dedans.
